Europäisches Patentamt

European Patent Office

Office européen des brevets

(11) Numéro de publication: **0 077 698**
**A2**

# (12) DEMANDE DE BREVET EUROPEEN

(21) Numéro de dépôt: 82401705.7

(22) Date de dépôt: 20.09.82

(51) Int. Cl.³: **F 03 D 3/04**

(30) Priorité: 23.09.81 ES 505720

(43) Date de publication de la demande:
27.04.83 Bulletin 83/17

(84) Etats contractants désignés:
AT BE CH DE FR GB IT LI LU NL SE

(71) Demandeur: De Zatarain Fernandez, Guillermo
Menéndez Palayo no. 53
Santander(ES)

(72) Inventeur: De Zatarain Fernandez, Guillermo
Menéndez Palayo no. 53
Santander(ES)

(74) Mandataire: Mongrédien, André et al,
c/o SOCIETE DE PROTECTION DES INVENTIONS 25, rue
de Ponthieu
F-75008 Paris(FR)

(54) Installation de transformation de l'énergie éolienne en énergie électrique.

(57) L'invention concerne une installation permettant d'obtenir de petites, moyennes et grandes puissances par la transformation de l'énergie éolienne en énergie électrique.

L'installation (1) comprend une tour cylindrique (2) munie de cloisons horizontales (5) définissant des chambres superposées (6) qui communiquent entre elles par des diffuseurs (7). La surface externe de la tour est constituée de palettes verticales (3) dont l'ouverture est contrôlée par une girouette (8). L'air pénètre par la chambre (6) supérieure puis descend à l'intérieur de la tour, en se comprimant, avant de traverser les turbines (15) actionnant les générateurs électriques (17). Il est ensuite admis dans une chambre de sortie (19) au travers de régulateurs (16), avant d'être refoulé hors de la tour, du côté opposé au vent.

Application à la création d'énergie électrique utilisable dans l'industrie, à partir de l'énergie éolienne.

EP 0 077 698 A2

./...

Croydon Printing Company Ltd.

FIG. 1

La présente invention se rapporte à des perfectionnements dans une installation pour obtenir des petites, moyennes et grandes puissances par la transformation de l'énergie éolienne en énergie électrique industriellement utilisable.

Depuis la plus haute antiquité, l'homme a tenté de tous temps de tirer profit de la force parfois impressionnante du vent, surtout dans certaines régions ; ainsi existent des mécanismes inventés dans ce but tels que : les moulins à vent traditionnels, ou bien les plus modernes du type éolien pourvus d'un grand nombre de pales plates, généralement employés pour la mise en action de petites pompes servant à remonter l'eau, pour arriver aux aéromoteurs modernes de grande vitesse pourvus d'hélices de type avion qui ont facilité leur utilisation pour la commande de petits et moyens générateurs électriques, presque toujours à courant continu.

Tous ces appareils, ou aéromoteurs, doivent nécessairement s'installer en haut d'un édifice, tour ou mât, qui, au moyen d'une girouette d'orientation leur permet de présenter leur superficie maximum à la direction du vent dominant. De par leur constitution et de par leur forme, seuls les appareils de petite puissance peuvent utiliser les vents faibles, entre 2 et 8 mètres par seconde, qui sont les plus fréquents, ne tirant pas profit des autres.

D'autres types d'aéromoteurs de moyenne puissance peuvent seulement fonctionner avec des vents compris entre 10 et 15 mètres par seconde et doivent être lancés par un moteur auxiliaire pour pouvoir utiliser les vents plus faibles.

En résumé, toutes ces machines possèdent une marge d'utilisation de l'énergie éolienne très limitée, ce qui limite beaucoup leur utilisation et
rend très onéreuse l'énergie produite.

Avec l'installation selon l'invention, tous
ces problèmes, ainsi que ceux qui en découlent sont
résolus, ce qui conduit à utiliser au maximum l'énergie.

L'installation est composée des parties ou
éléments suivants, qui permettent un fonctionnement
concret :

a) une tour cylindrique et fixe munie de
palettes directrices selon leurs génératrices, lesquelles
coopèrent à la captation de la force du vent qui est
dirigé vers l'intérieur de la tour, et à la sortie du
vent non utilisé dans l'installation,

b) la subdivision de l'autocompression progressive de la force éolienne captée, au moyen de
corps compresseurs indépendants, pourvus de leurs
tubes Venturi respectifs reliés en série sur le même
flux éolien,

c) utiliser comme principal élément dynamique
le vide ou la dépression produite dans la zone opposée
à celle de l'entrée de l'air, cette dépression étant
créée par la déviation du courant éolien ou vent,
non utilisé par la centrale et qui contourne toute
la tour,

d) utilisation du principe de division en
générateurs élémentaires de la puissance totale
projetée vers l'installation.

e) adoption, pour le maximum de simplicité
d'exploitation, de générateurs asynchrones avec le
minimum d'emploi de main-d'oeuvre.

En accord avec l'invention, l'installation
comprend : une tour de captation ou compresseur, avec
sélecteur d'orientation automatique, par girouette ;
un corps éjecteur, d'orientation également automatique
et une chambre des turbines pour la commande des générateurs électriques.

SR 1846 ES GP

La force vive du vent est captée ou recueillie et utilisée dans une tour de captation élevée, de type cylindrique, dont la surface extérieure est formée par un système de palettes directrices selon les diverses génératrices du cylindre, l'ensemble étant de section analogue aux palettes ou directrices qui donnent passage à l'eau, par exemple, vers les roues dans les turbines hydrauliques.

Ces palettes ou directrices peuvent être réalisées en un matériel massif quelconque ou bien être du type de structure en aile d'avion ; elles sont actionnées dans la partie du corps compresseur au moyen d'un axe commun selon les génératrices du cylindre qui constitue la tour.

Ces axes en nombre variable, selon l'importance et le diamètre de la tour, supportent en leur partie supérieure une bielle ou appendice, lequel est actionné par le marteau ou secteur circulaire du sélecteur qui se trouve placé au sommet de la tour.

Ce secteur du sélecteur est actionné à son tour par une girouette, disposée dans la partie supérieure de la tour, mue par le vent à chaque nouvelle direction de celui-ci ; la girouette produit à chaque nouvelle position l'ouverture des palettes directrices correspondant aux 90° ou 120° de la périphérie de la tour de captation qui se trouvent sous l'action directe du vent dominant, les autres palettes directrices restant en position fermée, présentant une surface intérieure parfaitement cylindrique.

En arrivant vers les palettes ouvertes, le vent pénètre par les interstices formés entre ces palettes, ces interstices définissant des canaux d'orientation ; par sa réaction sur chacune des palettes, le vent acquiert une direction circulaire

à l'intérieur du corps de la tour et il s'autocomprime en un mouvement en spirale vers le centre ou axe de la tour, sous l'action de la force vive qui le pousse.

La tour en elle-même est divisée en différents compartiments, au nombre de trois ou plus, au moyen de plans pareillement constitués par des structures et par des toiles semblables aux ailes d'avion, les divers compartiments ou degrés de compression du vent étant ainsi séparés.

Ces plans comportent en leur centre un diffuseur cônique. Le compartiment supérieur oblige le vent à se diriger à travers le diffuseur du plan de séparation suivant vers le compartiment adjacent, qui comporte en son centre, comme ceux restants, un diffuseur cônique creux, du type tube Venturi ; ce diffuseur dirige le courant éolien vers le bas au travers des autres tubes Venturi et ainsi dans les autres compartiments, réalisant le degré d'autocompression désiré selon les calculs adoptés.

Pour forcer le courant d'air de direction circulaire qui s'établit dans chaque compartiment, à s'orienter de haut en bas et à pénétrer dans le tube Venturi suivant, il faut compter en plus de l'effet de succion du courant produit par le tube situé à l'amont, avec l'action du cône renversé que forme la carcasse extérieure de chacun des tubes Venturi, évitant ainsi les effets de cavitation pneumatique.

Du dernier tube Venturi, disposé au centre du compartiment inférieur de la tour, on passe dans une prolongation de section cylindrique constante, dans laquelle le courant éolien acquiert sa vitesse définitive ; le courant arrive ainsi dans la chambre des turbines, de laquelle peuvent dériver une, deux, trois ou plusieurs prises pour les turbines respectives et dans laquelle, sous l'effet d'un autre diffuseur aveugle, le vent prend l'orientation des conduits de chaque turbine ou bien de toutes en même temps, selon la force extérieure du vent et selon que s'ouvrent un ou plusieurs des régulateurs à fenêtre ou à diaphragme qui peuvent aussi être placés dans l'espace défini à l'amont des turbines ; ces régulateurs laissent passer plus ou moins de vent, selon ce que l'on désire et ils peuvent être actionnés à la main ou automatiquement selon la demande de mise en service des générateurs électriques ; ces derniers sont accouplés à l'arbre des turbines soit directement, soit au moyen d'un renvoi de type bi-cônique qui sert à maintenir constante la rapidité de commande du générateur, avec l'aide d'un régulateur de type centrifuge. Les turbines du type en hélice peuvent avoir plus ou moins de pales et être du type avion ou du type le plus adéquat.

Le vent, ayant cédé la majeure partie de sa force vive, passe des turbines et au travers du régulateur à fenêtres ou à diaphragmes, à la chambre de sortie du vent ou éjecteur, en montant vers la partie des palettes de l'éjecteur située dans le compartiment inférieur le plus proche, pour transmettre un mouvement identique à la girouette supérieure de la tour, soit sur ses axes de rotation, soit par un système de contact qu'actionne un électroaimant pour chaque palette, ce système étant également prévu pour actionner les palettes directrices du corps compresseur. En conséquence, à chaque instant les palettes sont ouvertes sur les 90° ou 120° correspondant à la partie opposée par rapport à l'arrivée du vent, utilisant ainsi l'effet de succion ou de vide autour de la surface

**0077698**

cylindrique de la tour de captation ; ainsi, sur toute la hauteur de la tour, selon ses génératrices et du côté de la sortie du vent, se produit un grand vide ou dépression qui facilite la sortie et l'évacuation de l'air après que celui-ci a transféré sa force aux turbines, aidant ainsi à créer un meilleur jet de pression pneumatique ou éolienne utilisable pour la mise en action des générateurs.

Les différents plans des compartiments de la tour sont maintenus entre eux au moyen d'une charpente de barres de fer rondes, de profilés laminés ou de béton pour les grandes installations, ces barres de fer ou profilés étant à leur tour ancrés par des câbles dans diverses directions, donnant ainsi à l'ensemble une robuste rigidité permettant de résister aux plus fortes tempêtes sans aucun danger et présentant le meilleur rendement d'utilisation de l'énorme force du vent à grande vitesse.

Les matériaux à employer, aussi bien dans les tubes Venturi, que dans les hélices qui les entourent, ou dans les plans de compartiment et dans les palettes, peuvent être des plaques de tôle de fer, bois, plastique, toile d'avion vernie imperméable et similaires. Le bord de fuite des palettes pourra être revêtu de matériaux élastiques pour obtenir une fermeture hermétique.

Les dimensions de ces installations éoliennes peuvent être celles exigées pour une quelconque puissance, étant donné que la captation se fait sur le principe de l'autocompression du vent lui-même par un système statique.

Pour une meilleure compréhension de l'invention, la suite de la description se rapporte à un exemple pratique de l'installation, ladite installation étant purement énonciative et en aucun cas limitative de l'invention, en référence aux dessins annexés, dans lesquels :

SR 1846 ES GP

- la figure 1 montre une vue en élévation de l'installation en coupe partielle,

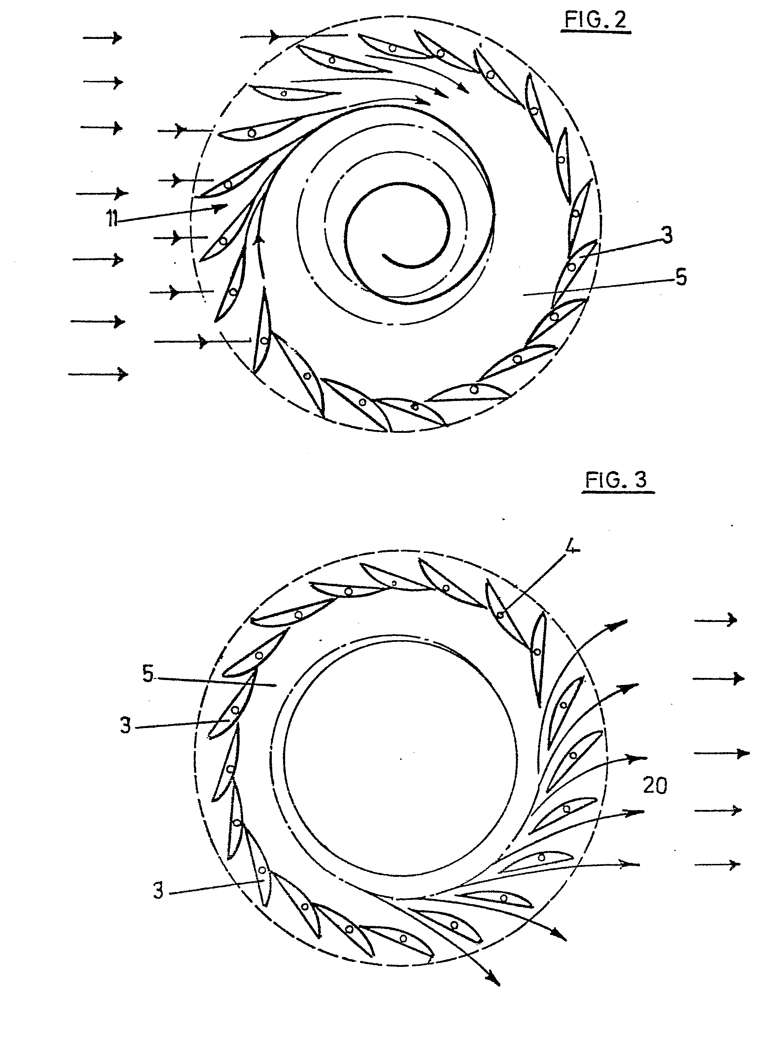

- la figure 2 montre une vue en plan, en section selon la ligne II-II de la figure 1,

- la figure 3 montre une vue en plan en section selon la ligne III-III de la figure 1.

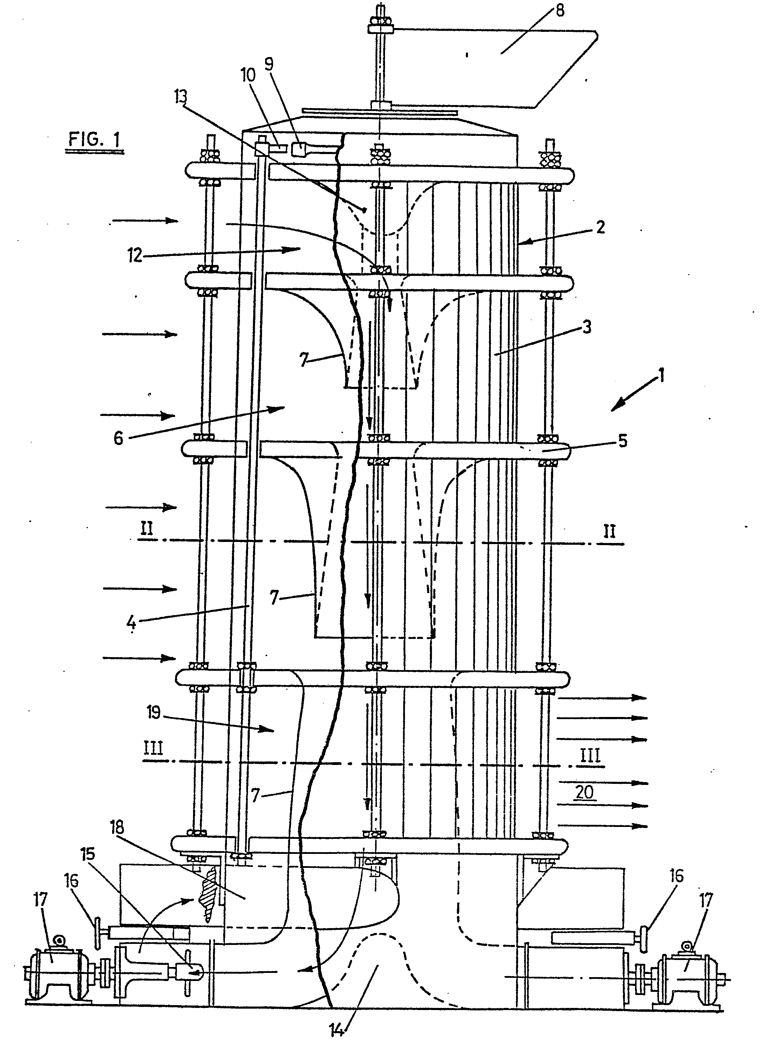

Sur la figure 1, on a représenté l'installation 1 constituée par une tour cylindrique 2 dont la surface latérale est formée de palettes 3 disposées sur des axes 4.

La tour présente des cloisons horizontales 5 parallèles qui définissent des chambres intérieures 6. Les cloisons sont constituées par des structures et toiles du type de celles utilisées dans les ailes d'avion, par des éléments de plastique, ou par des structures métalliques.

Au centre de chaque cloison sont disposés des diffuseurs 7 qui font communiquer les chambres.

Le vent pousse sur une girouette 8, reliée à un sélecteur présentant un marteau 9 qui agit lors de sa rotation sur les appendices 10 des arbres respectifs, produisant ainsi l'ouverture d'une zone de palettes correspondantes sur un angle compris entre 90° et 120°. Par les passages 11, le vent entre dans la chambre supérieure 12 de la tour, venant heurter un diffuseur massif 13 qui oblige le vent à se comprimer et à passer par le diffuseur 7 correspondant et, de celui-ci aux diffuseurs inférieurs ; le vent s'autocomprime ainsi jusqu'à ce qu'il atteigne la chambre inférieure de la tour, dans laquelle il est dirigé convenablement, au contact du diffuseur aveugle 14, vers les conduits de chaque turbine 15, selon que s'ouvrent un ou plusieurs des régulateurs 16, du type à fenêtres ou à diaphragmes, qui sont disposés dans l'espace précédant les turbines ; les régulateurs 16,

SR 1846 ES GP

qui peuvent être actionnés à la main ou automatiquement, laissent passer les moindres vents selon la demande des générateurs électriques 17.

Le vent qui sort des turbines à travers les régulateurs passe dans la chambre de sortie ou éjecteur 18 et de celui-ci à la chambre 19 où les palettes s'ouvrent dans la zone opposée 20 à celle de l'admission de l'air dans la tour. Dans ladite zone existe une dépression suffisante pour que le vent de la chambre 19 sorte à travers les palettes ouvertes vers l'extérieur.

La nature de l'invention ainsi que la manière de la réaliser étant suffisamment décrite, il faut constater que les dispositions indiquées précédemment sont susceptibles de modifications de détails qui n'altèrent pas son principe fondamental.

**0077698**

## REVENDICATIONS

1. Perfectionnements dans les installations pour obtenir des petites, moyennes et grandes puissances par la transformation de l'énergie éolienne, en énergie électrique industriellement utilisable, caractérisés en ce que l'installation (1) comprend une tour cylindrique (2) munie d'une série de cloisons horizontales (5) qui définissent des chambres intérieures correspondantes (6) communiquant entre elles au moyen de diffuseurs (7) disposés au centre de chacune des cloisons ; la surface latérale de la tour cylindrique étant constituée par des colonnes de palettes (3) disposées sur des axes verticaux (4) respectifs, de manière que lorsque le vent pousse sur une girouette (8) montée de façon tournante à la partie supérieure de la tour, celle-ci transmet sa rotation à un sélecteur qui ouvre une zone de palettes au travers desquelles le vent passe à l'intérieur de la première chambre située à la partie supérieure de la tour en heurtant un diffuseur massif (13) qui dirige le vent vers un premier diffuseur disposé dans ladite première chambre, contribuant à l'autocompression du vent qui passe dans la chambre contiguë, s'autocomprimant conjointement avec le vent qui pénètre directement dans cette chambre en passant par le diffuseur correspondant, et ainsi de suite jusqu'à ce que le vent atteigne une chambre inférieure à l'intérieur de laquelle, au contact d'un diffuseur aveugle (14), il prend la direction des conduits d'admission des turbines (15) de l'installation, lesdites turbines actionnant les générateurs électriques (17), et en ce que le vent passe des turbines dans une chambre de sortie ou éjecteur (18) au travers d'un régulateur ou diaphragme (16), le vent se dirigeant de l'éjecteur vers une chambre de

SR 1846 ES GP

sortie (19) de la tour, dans laquelle les palettes (3)
restent ouvertes dans une zone (20) opposée à celle
de l'entrée du vent dans la tour, une dépression
aidant à la sortie du vent de ladite chambre se
créant dans ladite zone à l'extérieur de la tour.

2. Perfectionnements selon la revendication 1,
caractérisés en ce que le sélecteur comporte un
marteau (9) dont la rotation transmet son mouvement
d'ouverture aux palettes (3) en agissant sur des
appendices correspondants (10) solidaires des axes
de rotation des palettes.

3. Perfectionnements selon les revendications
précédentes, caractérisés en ce que les palettes (3)
sont dotées d'électro-aimants qui ouvrent les palettes
lorsque s'établissent des contacts électriques entre
le marteau (9) du sélecteur dans sa rotation et lesdits
électro-aimants.

4. Perfectionnements selon les revendications
précédentes, caractérisés en ce que les diffuseurs (7)
de la tour sont reliés en série pour obtenir une
très bonne autocompression du vent.

5. Perfectionnements selon les revendications
précédentes, caractérisés en ce que, pour un meilleur
automatisme de l'installation, on prévoit que les
générateurs électriques (17) soient asynchrones et
puissent être facilement couplés à un réseau préexistant de haute ou basse tension que lui fournit
l'énergie magnétisable précisée, ou bien alimentés
par tout un système d'installations éoliennes s'étendant sur une vaste zone de terrain, afin de recueillir
avec la meilleure régularité l'énergie du vent disponible dans ladite zone durant la plus grande partie
du jour, compensant ainsi les pauses et périodes
d'activités de chaque installation sous les effets
des mêmes ondes éoliennes.

SR 1846 ES GP

6. Perfectionnements selon l'une·quelconque des revendications précédentes, caractérisés en ce que, en cas de fonctionnement autonome de l'installation, on utilise une turbine qui est toujours la première à entrer en fonctionnement, de façon à actionner un générateur synchrone qui, à son tour assure l'alimentation en courant magnétisant des autres générateurs asynchrones.

SR 1846 ES GP

FIG. 1

FIG. 2

11

3

5

FIG. 3

4

5

3

3

20